(19) Europäisches Patentamt
European Patent Office
Office européen des brevets

(11) **EP 1 978 698 B1**

(12) **EUROPEAN PATENT SPECIFICATION**

(45) Date of publication and mention
of the grant of the patent:
**05.06.2013 Bulletin 2013/23**

(51) Int Cl.:
*H04L 29/06* *(2006.01)*          *H04W 12/02* *(2009.01)*
*H04W 80/04* *(2009.01)*          *H04W 60/00* *(2009.01)*
*H04W 8/16* *(2009.01)*

(21) Application number: **06775438.2**

(22) Date of filing: **21.08.2006**

(86) International application number:
**PCT/CN2006/002120**

(87) International publication number:
**WO 2007/079628 (19.07.2007 Gazette 2007/29)**

(54) **A COMMUNICATION METHOD FOR MIPv6 MOBILE NODES**

KOMMUNIKATIONSVERFAHREN FÜR MIPV6-MOBILKNOTEN

PROCÉDÉ DE COMMUNICATION POUR LES NOEUDS MOBILES MIPV6

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **09.01.2006 CN 200610000541**

(43) Date of publication of application:
**08.10.2008 Bulletin 2008/41**

(73) Proprietors:
• **Huawei Technologies Co., Ltd.
Longgang District, Shenzhen
Guangdong 518129 (CN)**
• **Beijing Jiaotong University
Beijing 100044 (CN)**

(72) Inventors:
• **MIAO, Fuyou
Guangdong 518129 (CN)**
• **ZHANG, Hongke
Guangdong 518129 (CN)**
• **LU, Hongmei
Guangdong 518129 (CN)**
• **YANG, Shen
Guangdong 518129 (CN)**
• **ZHANG, Hui
Guangdong 518129 (CN)**

(74) Representative: **Körber, Martin Hans et al
Mitscherlich & Partner
Patent- und Rechtsanwälte
Postfach 33 06 09
80066 München (DE)**

(56) References cited:
WO-A1-2004/095795     WO-A2-2004/055993
CN-A- 1 309 491       CN-A- 1 682 510
US-A1- 2004 236 937

• **RAJEEV KOODLI VIJAY DEVARAPALLI HANNU
FLINCK CHARLIE PERKINS NOKIA RESEARCH
CENTER: "Solutions for IP Address Location
Privacy in the presence of IP Mobility; draft-
koodli-mip6-location-privacy-solutio ns-00.txt",
IETF STANDARD-WORKING-DRAFT, INTERNET
ENGINEERING TASK FORCE, IETF, CH, 14
February 2005 (2005-02-14), XP015039255, ISSN:
0000-0004**
• **YING QIU ET AL: "Protocol for hiding movement
of mobile nodes in mobile IPv6", VEHICULAR
TECHNOLOGY CONFERENCE, 2005. VTC-2005-
FALL. 2005 IEEE 62ND DALLAS, TX, USA 25-28
SEPT., 2005, PISCATAWAY, NJ, USA,IEEE, vol. 2,
25 September 2005 (2005-09-25), pages 812-815,
XP010878596, DOI: DOI:10.1109/VETECF.
2005.1558037 ISBN: 978-0-7803-9152-9**
• **LU HONGMEI ZHANG HONGKE NGI RESEARCH
CENTER BEIJING JIAOTONG UNIVERSITY:
"Privacy Identifier in MIPv6; draft-zhang-mip6-
pid-00.txt", IETF STANDARD-WORKING-DRAFT,
INTERNET ENGINEERING TASK FORCE, IETF,
CH, 29 July 2006 (2006-07-29), XP015047349,
ISSN: 0000-0004**

**Description**

**Technical Field of the Invention**

The present invention relates to the field of mobile communication technology, and more particularly to a method for communication of MIPv6 mobile nodes.

**Background of the Invention**

The development trend of a Mobile Internet Protocol Version 6 (Mobile IPv6, or MIPv6) network is to evolve towards varied seamless wide-band access network, and various wired or wireless access schemes have to provide a general mobility for user service experiences so that the users can enjoy consistent service properties anywhere and anytime. The communication between a mobile node (MN) and a correspondent node (CN) is carried out through conventional routing technologies when the mobile node is in its home network segment, without the involvement of the mobile IPv6. When the mobile node moves to a foreign link, the home address of the mobile node is kept unchanged while a temporary IP address, i.e., a care-of address (CoA), is allocated to the mobile node. The home address (HoA) is a unicast routable address allocated to the mobile node and is used as a permanent address of the mobile node. The mobile node informs a home agent (HA) of the binding message of the home address and the care-of address. In the communication between the mobile node and the correspondent node, the home address of the MN is still used, and the data packets are still sent to the home network segment of the mobile node. The home agent intercepts these data packets and forwards them to the care-of address of the mobile node by use of a tunneling manner, according to the acquired mapping relationship. Thus the mobile node can communicate directly with the correspondent node. The above basic operation process of the mobile IPv6 is discussed merely under the circumstance of ideal Internet without considering the security issues. There are various attacks, e.g., eavesdropping, tampering, etc., towards the message in a real network. If an attacker intercepts the binding message and changes the care-of address in the message to an address of the attacker, and then forwards the changed message to HA or CN, the attacker will be able to intercept the communication data destined to the mobile node. Meanwhile, attacks on the destination option or routing header of the mobile IPv6 can also affect the communication security. In order to assure that a system employing mobile IPv6 is as secure as that not employing mobile IPv6, the binding message must be protected so that it will not be modified illegally, thereby preventing malicious attack on the mobile node. In the communication scheme of the mobile node, the home address of the mobile node must be hidden so as to prevent tracking of the eavesdropper and malicious attack.

Among the existing methods for communication of IPv6 mobile node, one configures a temporary home address and makes it change periodically, with a temporary mobile identifier (TMI). The TMI takes 16 bits out of the 128 bits of the IPv6 address space, as a prefix of the TMI. Any address having such prefix is considered as TMI, and a TMI is defined to be non-routable. A periodically variable TMI of 128 bits is assigned to each MN, and the algorithm of the TMI is that: digest = SHA-112 (Public Key imprint), where the public key (kpm) and imprint are sent to the correspondent party and the message signed with a private key, and the imprint is a random number of 128 bits. The home agent and the correspondent node identify the MN by TMI. The CN identifies a corresponding IP security association (IPsec SA) with TMI, and a firewall performs filtering also using TMI. The MN makes use of a route optimal mode. In a binding update (BU), TMI is in the home address option, and the real home address is in a newly defined binding update sub-option. The CN binds the TMI, home address and care-of address together. Next, in the home address option and type 2 routing header, the data packets between the MN and CN include the TMI which is used to substitute for the current home address. Thus the eavesdropper can not identify data packets belonging to a specific node. However, in this scheme, the first 16 bits of the temporary mobile identifier are fixed, thus the attacker can easily identify the TMI. The TMI is the substitution for the home address, thus the update of the TMI must have the same security requirement as the update of the home address. As a result, the periodically updated TMI will cause the frequent execution of the return routability procedure (RRP). The sequence number of the binding update message is incremental, thus it can still be tracked.

Another method for communication of the IPv6 mobile node substitutes a substituting privacy label (PL) for the home address, thereby hiding the home address. The privacy label is sent as a destination option instead of the home address, and its algorithm is that:

$$Privacy\text{-}Label = String \; XOR \; HoA$$

where,

$$\text{String} = \text{First} (128, \text{HMAC\_SHA1} (\text{Kbm}, (\text{CoA} \mid \text{Home Nonce Index} \mid \text{Care-of Nonce Index})))$$

After the NM gets the new care-of address, it is necessary to perform binding update on the CN. When the CN receives the new destination option containing the PL, it first calculates the binding management key (Kbm), with the same algorithm as that for calculating Kpm. The CN calculates the character string using the Kbm and recovers HoA. MAC is then verified for the binding update using a home private key identifier and the Kbm. If the binding update is successful, then PL is regarded as valid and the CN stores the current directory and the Kbm. The CN then sends a regular BA to the MN. The PL is different after each binding update of the MN, thereby preventing eavesdroppers from tracking the NM through the home address. However, since the PL and the care-of address are updated asynchronously, the new care-of address bridges the new and old PLs. The privacy management key (the Kpm is the same as Kbm) is used in the calculation of the PL, then it is not possible to generate a new PL prior to the binding update message. When the MN acquires the new care-of address, it has to perform the RRP before binding update to the CN. In this process, the MN uses the new care-of address and the old PL, that is, the attacker can get to know the new care-of address of MN by means of the old PL. After binding update, the MN uses the new care-of address and the new PL; the attacker can now get the new PL using the new care-of address and continues to track the MN.

US 2004/236937 AI discloses a mechanism of providing privacy to nodes using mobile IPv6 with route optimization. A "privacy label" not allowing a home address to be visible during packet exchange is used in place of a home address associated within a mobile node. Further, Privacy Label=MAC_Kbm XOR "string", where "string" is (home address‖current care of address), where "‖" denotes concatenation. The privacy label is supplied by the mobile node to the correspondent node within an extension to the Binding Update to the correspondent node.

XP015039255(RAJEEV KOODLI VIJAY DEVERAPALLI HANNU FLINCK CHARLIE PERKINS NOKIA RESEARCH CENTER: "Solutions for IP address Location Privacy in the presence of IP Mobility; draft-koodli-mip6-location-privacy-solutions-00.txt", IETF STANDARD-WORKING-GRAFT, INTERNET ENGINEERING TASK FORCE, IETF, CH, 14 February 2005 (2005-02-14), ISSN: 0000-0004) is directed to provide a solution to protect the Home Address of a MN. A Privacy-Label is disclosed, the Privacy-Label = String XOR HoA, where the String = First (128, HMAC_SHA1 (Kpm, (CoA | Home Nounce Index Care-of Nonce Index))), Kpm is the privacy management key. When a CN receives a BU with alternate-CoA option and a new destination option containing the Privacy Label, it recovers the Home Address from the Privacy Label, and verify if it is actually the Home Address present in the source IP address.

XP010878596 (YING QIU ET AL:"protocol for hiding movement of mobile nodes in mobile IPv6" VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA, IEEE LNKD-DOI:10.1109/VETECF.2005.1558037, vol. 2, 25 September 2005 (2005-09-25), pages 812-815, ISBN:978-0-7803-9152-9) is directed to a protocol for hiding the relationship between home address and care-of address of a mobile node (see D3, Abstract). A Privacy Label is used to replace a HoA in a destination option, where, $privacylabel = prf (k_{PM}, CoA \mid i \mid j) \oplus HoA$, $prf$ is a keyed pseudo random function, $k_{PM}$ is the privacy management key, i and j are the home nonce index and care-of nonce index in RR protocol, the RR protocol is described in RFC 3775.

## Summary of the Invention

The objective of the present invention is to provide a method for communication of a MIPv6 mobile node, in which the home address is hidden by using an identifier updated synchronously to the care-of address instead of the home address and has the identifier sent as a destination option, thus preventing malicious attack and tracking of the mobile node

According to a first aspect of the present invention, a method for communication of a MIPv6 mobile node comprises:

accessing, by the mobile node, a network at an access location and obtaining a new care-of address, and calculating a private identifier PID using the care-of address, wherein the PID = ClearWord XOR HoA, the ClearWord is a random number updated synchronously to the update of the care-of address, the ClearWord= First (128, HMAC_SHA1 (CN|Seed|HoA|CoA)), the Seed is a random number generated by the mobile node; the HoA is the home address of the mobile node and the CN is an address of a correspondent node;

replacing, by the mobile node, its home address with the PID, filling the PID into a binding update message, and sending the binding update message to a home agent and the correspondent node respectively, wherein a Word option is added in the binding update message, and the ClearWord is filled in the Word option; and

recovering, by the home agent and the correspondent node, the HoA of the mobile node using the PID and the ClearWord, after receiving the binding update message, wherein the HoA = PID XOR ClearWord.

Preferably, the update of the PID is synchronous to the update of the care-of address.

Preferably, a new sequence number of the binding update message of the mobile node is a result of performing XOR operation on the ClearWord and the original sequence number of the binding update message, and the new sequence number is filled into the binding update message instead of the original sequence number.

Preferably, the correspondent node changes the new sequence number back to the original sequence number, after recovering the ClearWord.

Preferably, the method further comprises: when the mobile node moves to a foreign location, obtaining, by the correspondent node, the corresponding care-of address using an IPv6 neighbor discovery mechanism, and forwarding data packets to a foreign network segment to which the care-of address belongs, wherein the prefix of the care-of address is a prefix of a foreign network address.

More preferably, the method further comprises:

encrypting, by the mobile node, the ClearWord using a binding management key Kbm, and sending the encrypted ClearWord to the correspondent node via the binding update BU message;
after receiving the binding update message, calculating, by the correspondent node, the Kbm and verifying the validity of Message Authentication Code MAC, then obtaining the ClearWord by decrypting the encrypted ClearWord after verifying the MAC.

According to a second aspect of the present invention, an MIPv6 mobile node comprises:

a private identifier calculating module configured to, when the mobile node accesses a network at an access location and obtains a new care-of address, CoA, calculate a private identifier, PID, using the care-of address, wherein the PID = ClearWord XOR HoA, the ClearWord is a random number updated synchronously to the update of the care-of address, the ClearWord = First (128, HMAC_SHA1 (CN|Seed|HoA|CoA)), the Seed is random number generated by the mobile node, the HoA is the home address of the mobile node and, the CN is an address of a correspondent node;
an encapsulating module configured to replace a home address with the PID, fill the PID into a binding update message, fill a ClearWord in a Word option of the binding update message; and
a sending module configured to send the binding update message containing the PID to a home agent and the correspondent node, respectively.

According to a third aspect of the present invention, a correspondent node comprises:

a private identifier obtaining module configured to obtain a private identifier, PID, from a received binding update message;
a ClearWord obtaining module configured to obtain a ClearWord from the received binding update message, wherein a Word option is added in the binding update message, and the ClearWord is filled in the Word option, the ClearWord is a random number updated synchronously to the update of the care-of address of a mobile node; and
a home address obtaining module configured to obtain a home address HoA according to the obtained Clearword and the obtained PID, wherein the HoA = PID XOR ClearWord; and wherein
the PID is calculated by the mobile node using PID= Clearword XOR HoA, the ClearWord = First (128, HMAC_SHA1 (CN|Seed|HoA|CoA)), the Seed is a random number generated by the mobile node, the CN is an address of the correspondent node.Comparing with prior arts, the method for communication of a MIPv6 mobile node according to the present invention configures the care-of address when the mobile node accesses a network link at the current access location. A private identifier PID updated synchronously to the care-of address is obtained using logic operations; the mobile node replaces its home address with the PID, and sends the binding update message containing the PID and the mapping of the care-of address to the home agent and correspondent node, respectively. In the return routability procedure among the mobile node, the home agent and the correspondent node, both a home test initialization (HoTI) and a home test (HoT) messages use the address of the home agent and the PID to perform communication. The correspondent node receives the binding update message and recovers the home address using the PID. Thus, the home address does not appear during the whole communication procedure. Moreover, the care-of address and the PID are updated synchronously, preventing eavesdroppers from performing an RRP-related attack and continuing to track the mobile node.

At the mobile node, an XOR operation is performed using the random number updated synchronously to the care-of address and the original sequence number of the binding update message; and the new sequence number is filled into the binding update message instead of the original sequence number. The correspondent node receives the binding update message and recovers the original sequence number. In the Binding Acknowledgment message responded by the MN, the original sequence number is also replaced by the new sequence number, so that the BU sequence number is random and not trackable, thereby preventing the attacker from tracking the messages according to the BU sequence number.

**Brief Description of the Drawings**

Fig. 1 is a schematic diagram showing a mobile IPv6 communication procedure of route optimization mode;
Fig. 2 is a schematic diagram showing application of the method for communication of the IPv6 mobile node according to an embodiment of the present invention in the return routability procedure; and
Fig. 3 is a schematic diagram showing application of the method for communication of the IPv6 mobile node according to an embodiment of the present invention in the binding update procedure.

**Detailed Description of the Invention**

The embodiments of the present invention will be described in detail in the following with reference to the accompanying drawings.

The basic thinking of hiding the home address of the IPv6 mobile node according to an embodiment of the present invention is as follows: after the mobile node accesses the network link at the current access location and gets the care-of address, it substitutes a private identifier (PID) for the home address and sends the binding update message containing the PID and the mapping of the care-of address to the home agent and the correspondent node. There is also a binding update procedure in the return routability procedure (RRP) among the mobile node, the home agent and the correspondent node. Both the home test initialization (HoTI) and the home test (HoT) messages use the address of the home agent and the PID to perform communication, so that the home address of the mobile node is hidden.

If the mobile node is to maintain communication unblocked during the handover procedure of Layer 3 network, it must ensure that any movement is transparent to communication applications, that is, the network layer identifiers of the communication applications (i.e., IP addresses) are kept unchanged. The Internet routing mode selects the route according to the destination address of the network layer, and sends data packets to the network at which the destination address is located, so as to reach the node represented by the destination address. The movement of a network layer must solve the problem that at the same time of using a fixed IP address during a whole procedure of a communication application, the IP address accessible within the network segment where the routing node currently locates is used.

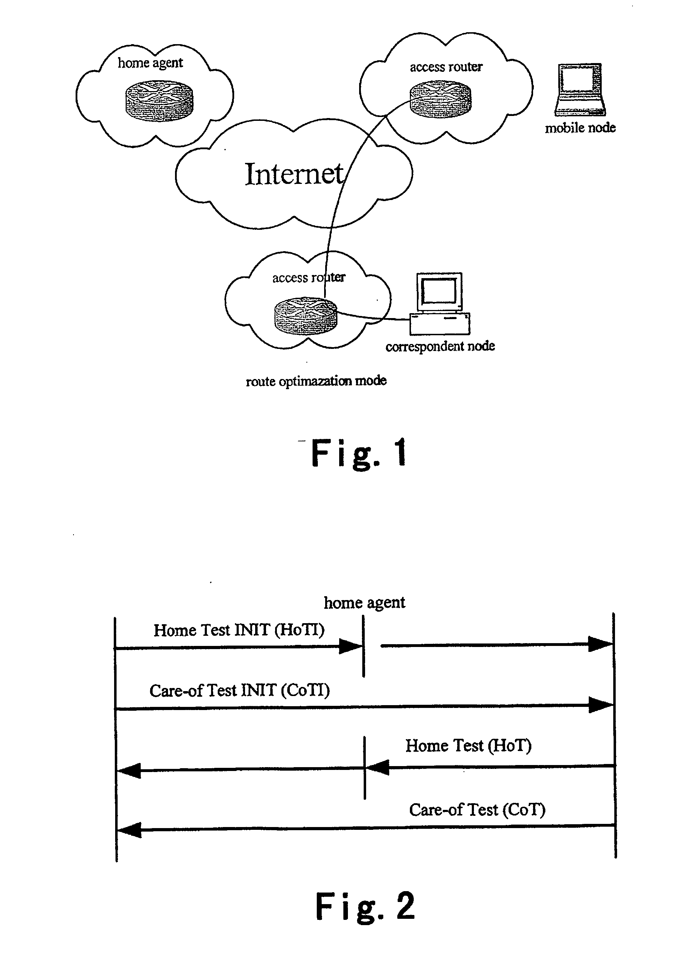

The solution for maintaining communication unblocked in the course of the network layer movement by the mobile IPv6 is summarized as follows: (1). the home address HoA is defined and upper layer communication applications use the home address during the whole procedure, to ensure the movement transparency of the applications; (2). the care-of address is defined and obtained from a foreign network, which guarantees the communication accessibility under the current routing mode; (3). the mapping between the home address and care-of address establishes the relationship between the network layer identification used by the upper layer applications and the destination identification used by the network layer routing. When the mobile node moves to a foreign location, one or more care-of addresses are acquired by an IPv6 neighbor discovery mechanism, which is normally stateless address auto-configuration. The prefix of the care-of address is a prefix of a foreign sub-network. The mobile node informs the correspondent node of the binding message of the home address with the care-of address. When the correspondent node knows the care-of address of the mobile node, it can directly forward data packets to the foreign network segment at which the care-of address is located. As a result, a normal communication can be directly executed between the mobile node and the correspondent node. Such a communication procedure is referred to as a communication procedure of route optimization mode, which is shown in Fig. 1. After the mobile node acquires the care-of addresses, it must register one of the care-of addresses with its home agent. The registration is done by means of sending a binding update and a message to the home agent and returning a response "Binding Acknowledgement" from the home agent.

After the correspondent node accomplishes its current binding, a packet destined from the correspondent node to the mobile node is directly delivered to the care-of address of the mobile node (route optimization mode). When delivering any mobile IPv6 packets, the correspondent node inquires the acquired binding cache according to the IP address of the packet. If a match exists in the binding cache, the correspondent node uses a type 2 routing header (a type of message header of mobile IP). The destination address of the packet is replaced with the care-of address acquired through the inquiry, and the address in the type 2 routing header is the home address of the mobile node. When the mobile node sends a packet to the correspondent node, in a destination option extension header, the source address of the packet is configured as the care-of address of the mobile node using a home address option; and the address in the home address option is the home address of the mobile node.

The relationship between the mobile node and the correspondent node is arbitrary, and is not suitable when a security association is required to be previously established. The binding can be protected by use of a binding management key (Kbm) to ensure the security of the binding. The negotiation binding procedure of the mobile node with the correspondent node is established through the RRP. The mobile IPv6 protocol messages delivered between the MN and the CN include: Binding Update (BU) sent from the MN to the CN, and Binding Acknowledgment (BA) sent from the CN to the MN. The objective of the RRP is to ensure that both the home address and the care-of address in the binding update are actually accessible and they both belong to the mobile node. The principal objective of the RRP is to ensure that authenticity and reliability of the binding update received by the correspondent node, and the procedure comprises the home test procedure and the care-of test procedure.

The home test procedure begins with initiating a home test initialization message by the mobile node, which is forwarded to the correspondent node via a tunnel by the home agent, thereby informing the correspondent node to initiate the necessary work for home test. Upon receiving the home test initialization message, the correspondent node performs operations to generate a "home keygen token" using the home address together with two random numbers "Kcn" and "nonce", and then informs the mobile node of index numbers of the "home keygen token" and the "nonce" by use of the home test message returned to the mobile node.

The care-of test begins with sending the care-of test initialization message directly to the correspondent node by the mobile node. The correspondent node generates "care-of keygen token" by performing corresponding operations using the care-of address contained in the care-of test init message together with the "ken" and "nonce", and index numbers of the "care-of keygen token" and the "nonce" are then carried in the care-of test message returned to the mobile node. The mobile node first generates a binding management key (Kbm) using "home keygen token" and "care-of keygen token", then performs corresponding operations using the kbm and the binding update message to generate an authorization code 1, which is carried in the binding update message. Upon receiving the binding update message, the correspondent node performs corresponding operations using the "home keygen token", "care-of keygen token" and "nonce" to obtain an authorization code 2. The two authentication codes are compared, if they are the same, the correspondent node can then determine that the binding message is authentic; otherwise, the binding message is considered invalid.

Fig. 2 is a schematic diagram showing the application of a method for communication of the IPv6 mobile node according to an embodiment of the present invention to the return routability procedure. As shown in Fig. 2, the RRP is realized with the exchange of signaling messages (HoTI and HoT messages, as well as CoTI and CoT messages) between the mobile node and the correspondent node. To speed up the processing of the RRP, the mobile node sends HoTI and CoTI messages almost at the same time. The mobile node first generates two random numbers of 64 bits, i.e., HoT cookie and CoT cookie, and sends them to the correspondent node as message parameters. The difference between the HoTI and CoTI messages lies in that, the HoTI message is first sent to the original agent by use of a reversed tunnel technology, and then forwarded to the correspondent node; while the CoTI message is directly sent to the correspondent node directly by use of a regular route mechanism.

A new identifier, i.e., Private Identifier (PID) is defined, which changes with the care-of address. The PID is sent as destination option instead of the home address; and the correspondent node recovers the home address from the binding update data packet using the PID. The update of the PID is synchronous to the update of the care-of address, which will be described in detail in the following.

The definition of the identifier is as follows:

PID = ClearWord XOR HoA
where, ClearWord = First ( 128 , HMAC_SHA1 ( CN|Seed|HoA|CoA)).

where, Seed is a random number generated by the mobile node. Since Seed is not transmitted in a plain text, it is possible to use the same Seed for all the CNs/HAs. The introduction of Seed is for ensuring the randomness of ClearWord. When calculating ClearWord, it is ensured that each CN can get a different ClearWord by introducing the CN address, and ClearWord and CoA can be updated synchronously by introducing CoA. During the RRP of MN and CN or when using a bidirectional tunneling mode, neither the HoTI nor HoT message uses the home address, instead, they both execute communication using the address of the home agent and PID, so as to prevent the attacker from tracking MN by CN).

The format of HoTI message sent from the mobile node to the home agent is as follows:

IPv6 header (source = care-of address,

destination = home agent)

ESP header in tunnel mode

IPv6 header (source = home address,

destination = correspondent node)

Mobility Header

Home Test Init

The format of HoTI message sent from the mobile node to the correspondent node is as follows:

IPv6 header (source = home agent,

destination = correspondent node)

Destination Options header

Home Address option (PID)

Mobility header

Home Test Init

The format of HoT message returned from the correspondent node to the home agent is as follows:

IPv6 header (source = correspondent node,

destination =home agent)

Routing header (type 2)

PID

Mobility header

Home Test

The format of HoT message sent from the correspondent node to the mobile node is as follows:

IPv6 header (source = home agent,

destination =care-of address)

ESP header in tunneling mode

IPv6 header (source = correspondent node,

destination = home address)

Mobility header

Home Test

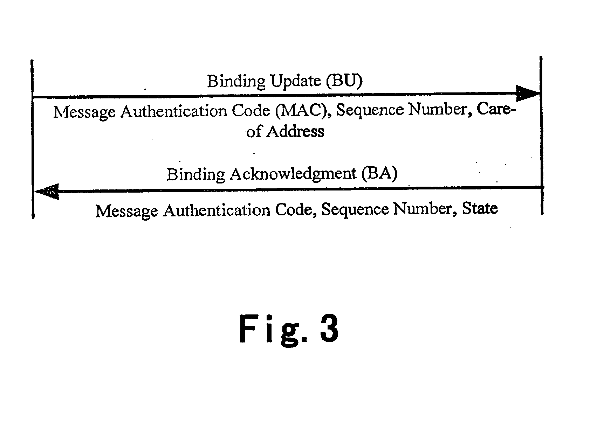

Fig. 3 is a schematic diagram showing application of a method for communication of the mobile IPv6 mobile node according to an embodiment of the present invention to the binding update procedure. As shown in Fig. 3, a Word option whose content is ClearWord (or EncryptedWord) is newly added in the binding update message. At the mobile node side, the mobile node immediately calculates and uses a new PID upon acquiring the new care-of address. That is to say, the update of the PID is synchronous to the update of the care-of address. In binding update of HA, the PID is in the home address option (i.e., replacing the HoA); ClearWord is in a Word option of the BU; and the Word option is protected by the IPsec encryption. At the HA side, the BU message is protected by the ESP encryption (transmission mode), which ensures the security of ClearWord. Although SA is created on the home address in the transmission mode, the PID is used as a source address in the BU message, thus the new PID will not affect the IPsec operation. HA can get ClearWord from the Word option after decrypting the BU message, and recover HoA by an expression of: HoA= PID XOR ClearWord.

For binding update of CN, the MN makes use of a new PID in the RRP, here CN does not need to verify the validity of PID. At the end of RRP, the MN acquires a binding management key (Kbm), and encrypts ClearWord by use of the Kbm,

EncryptedWord = Encrypt (ClearWord) Kbm,

where, "Encrypt () Kbm" denotes using the Kbm to encrypt the content contained in brackets. The EncryptedWord is filled in the Word option in the BU message and sent to CN together with BU message.

At the CN side, upon receiving the BU, the CN first calculates the Kbm and verifies the validity of the Message Authentication Code (MAC), and then decrypts EncryptedWord to get ClearWord, after the verification of MAC.

ClearWord = Decrypt (EncryptedWord) Kbm,

where, "Decrypt () Kbm" denotes using the Kbm to decrypt the content within brackets. The CN can recover HoA using PID and Clearword by the following algorithm:

HoA = PID XOR ClearWord;

Most importantly, the correctness of the corresponding relation between the PID and HoA acquired in such a way can be guaranteed.

Thus, the home address does not appear in the whole communication procedure. Moreover, the update of care-of address and the update of the PID are synchronous, so as to prevent eavesdroppers from performing RRP-related attack and continuing to track the mobile node.

Since it is possible to continue to track the mobile node using the sequence number in BU message, an XOR operation is performed on the first 16 bits of ClearWord and the sequence number of BU message:

newSequence# = clearword (16) XOR Sequence#,

The newSequence# is filled in the BU message, replacing the original sequence number. At the correspondent node, after the CN recovers ClearWord, the newSequence# is recovered to be a real sequence number by the following algorithm:

Sequence# = clearword (16) XOR newSequence#,

In the BA message responded by the CN, the original sequence number also has to be replaced by newSequence#, thus causing the sequence number to be random and not trackable.

In the method for communication of the IPv6 mobile node according to an embodiment of the present invention, the home address is replaced by the configured privacy label which is sent as the destination option; and the sequence number in the BU messages are improved to be random by setting PID and its algorithm, thus preventing eavesdroppers from continuing to track the mobile node via the home address.

The present invention is described with reference to the above-mentioned embodiments, but is not limited to the scope of the disclosure. Those skilled in the art will appreciate that many modifications and changes may be made without departing from the scope of the present invention, and should fall within in the scope of the attached claims.

**Claims**

1.   A method for communication of a MIPv6 mobile node, comprising:

accessing, by the mobile node, a network at an access location and obtaining a new care-of address, CoA, and calculating a private identifier, PID, using the care-of address, wherein the PID = ClearWord XOR HoA, the ClearWord is a random number updated synchronously to the update of the care-ofaddress, the ClearWord= First (128, HMAC_SHA1 (CN|Seed|HoA|CoA)), the Seed is a random number generated by the mobile node,

the HoA is the home address of the mobile node and the CN is an address of a correspondent node; replacing, by the mobile node, its home address, HoA, with the PID, filling the PID into a binding update message, and sending the binding update message to a home agent and the correspondent node respectively, wherein a Word option is added in the binding update message, and the ClearWord is filled in the Word option; and recovering, by the home agent and the correspondent node, the HoA of the mobile node using the PID and the ClearWord, after receiving the binding update message, wherein the HoA = PID XOR ClearWord.

2. The method of claim 1, wherein the update of the PID is synchronous to the update of the care-of address.

3. The method of claim 1, wherein the PID is filled in a home address option of the binding update message.

4. The method of claim I, wherein the Word option is protected by IPsec encryption.

5. The method of claim 1, wherein a new sequence number of the binding update message is a result of performing XOR operation on the ClearWord and the original sequence number of the binding update message, and the new sequence number is filled into the binding update message instead of the original sequence number.

6. The method of claim 5, wherein the correspondent node changes the new sequence number back to the original sequence number, after recovering the ClearWord.

7. The method of claim 1, wherein the method further comprises:

   when the mobile node moves to a foreign location, obtaining, by the correspondent node, the corresponding care-of address using an IPv6 neighbor discovery mechanism, and forwarding data packets to a foreign network segment to which the care-of address belongs, wherein the prefix of the care-of address is a prefix of a foreign network address.

8. The method of claim 1, wherein the method further comprises:

   encrypting, by the mobile node, the ClearWord using a binding management key Kbm, and sending the encrypted ClearWord to the correspondent node via the binding update BU message;
   after receiving the binding update message, calculating, by the correspondent node, the Kbm and verifying the validity of Message Authentication Code MAC, then obtaining the ClearWord by decrypting the encrypted Clear-Word after verifying the MAC.

9. An MIPv6 mobile node, comprising:

   a private identifier calculating module configured to, when the mobile node accesses a network at an access location and obtains a new care-of address, CoA, calculate a private identifier, PID, using the care-of address, wherein the PID = ClearWord XOR HoA, the ClearWord is a random number updated synchronously to the update of the care-of address, the Clearword = First (128, HMAC_SHA1 (CN|Seed|HoA|CoA)), the Seed is a random number generated by the mobile node, the HoA is the home address of the mobile node and the CN is an address of a correspondent node;
   an encapsulating module configured to replace a home address with the PID, fill the PID into a binding update message, and fill a ClearWord in a Word option of the binding update message; and
   a sending module configured to send the binding update message containing the PID to a home agent and the correspondent node, respectively.

10. The MIPv6 mobile node of claim 9, further comprising:

    an encrypting module configured to encrypt the ClearWord using a binding management key Kbm, and fill the encrypted ClearWord in the Word option of the binding update message.

11. A correspondent node, comprising:

    a private identifier obtaining module configured to obtain a private identifier, PID, from a received binding update message;
    a ClearWord obtaining module configured to obtain a ClearWord from the received binding update message, wherein a Word option is added in the binding update message, and the ClearWord is filled in the Word option, the ClearWord is a random number updated synchronously to the update of the care-of address of a mobile node; and

a home address obtaining module configured to obtain a home address HoA according to the obtained ClearWord and the obtained PID, wherein the HoA = PID XOR ClearWord; and wherein

the PID is calculated by the mobile node using PID= ClearWord XOR HoA, the <u>ClearWord = First</u> (128, HMAC_SHAI (CN|Seed|HoA|CoA)), <u>the Seed is a random number generated by the mobile node,</u> the CN is an address of the correspondent node.

12. The correspondent node of claim 11, further comprising:

a verifying module configured to verify the binding update message, before the private identifier obtaining module and the ClearWord obtaining module operate.

**Patentansprüche**

1. Verfahren für die Kommunikation eines MIPv6-Mobilknotens, das Folgendes umfasst:

Zugreifen durch den Mobilknoten auf ein Netz an einem Zugriffsort und Erhalten einer neuen Care-of-Adresse, CoA, und Berechnen einer Privatkennung, PID, unter Verwendung der Care-of-Adresse, wobei PID = ClearWord XOR HoA, wobei das ClearWord eine synchron mit der Aktualisierung der Care-of-Adresse aktualisierte Zufallszahl ist, wobei ClearWord = Erste (128, HMAC_SHA1 (CN|Seed|HoA|CoA)), wobei Seed eine Zufallszahl ist, die durch den Mobilknoten erzeugt wird, wobei die HoA die Heimatadresse des Mobilknotens ist und wobei CN eine Adresse eines entsprechenden Knotens ist;

Ersetzen durch den Mobilknoten seiner Heimatadresse HoA durch die PID, Füllen der PID in eine Bindungsaktualisierungsnachricht und Senden der Bindungsaktualisierungsnachricht zu einem Heimatagenten bzw. dem entsprechenden Knoten, wobei eine Wort-Option zu der Bindungsaktualisierungsnachricht hinzugefügt wird und das ClearWord in die Wort-Option gefüllt wird; und

Wiedergewinnen durch den Heimatagenten und den entsprechenden Knoten der HoA des Mobilknotens unter Verwendung der PID und des ClearWord nach dem Empfang der Bindungsaktualisierungsnachricht, wobei HoA = PID XOR ClearWord.

2. Verfahren nach Anspruch 1, wobei die Aktualisierung der PID synchron mit der Aktualisierung der Care-of-Adresse erfolgt.

3. Verfahren nach Anspruch 1, wobei die PID in eine Heimatadressen-Option der Bindungsaktualisierungsnachricht gefüllt wird.

4. Verfahren nach Anspruch 1, wobei die Wort-Option durch eine IPsec-Verschlüsselung geschützt ist.

5. Verfahren nach Anspruch 1, wobei eine neue Folgenummer der Bindungsaktualisierungsnachricht ein Ergebnis der Ausführung der XOR-Operation an dem ClearWord und der ursprünglichen Folgennummer der Bindungsaktualisierungsnachricht ist und die neue Folgennummer in die Bindungsaktualisierungsnachricht statt der ursprünglichen Folgennummer gefüllt wird.

6. Verfahren nach Anspruch 5, wobei der entsprechende Knoten die neue Folgennummer zurück in die ursprüngliche Folgennummer ändert, nachdem das ClearWord wiedergewonnen worden ist.

7. Verfahren nach Anspruch 1, wobei das Verfahren ferner Folgendes umfasst:

wenn sich der Mobilknoten zu einem fremden Ort bewegt, Erhalten durch den entsprechenden Knoten der entsprechenden Care-of-Adresse unter Verwendung eines IPv6-Nachbarentdeckungsmechanismus und Weiterleiten von Datenpaketen zu dem fremden Netzsegment, zu dem die Care-of-Adresse gehört, wobei das Präfix der Care-of-Adresse ein Präfix einer Fremdnetzadresse ist.

8. Verfahren nach Anspruch 1, wobei das Verfahren ferner Folgendes umfasst:

Verschlüsseln durch den Mobilknoten des ClearWord unter Verwendung eines Bindungsmanagementschlüssels, Kbm, und Senden des verschlüsselten ClearWord zu dem entsprechenden Knoten über eine Bindungsaktualisierungsnachricht, BU-Nachricht;

nach dem Empfang der Bindungsaktualisierungsnachricht Berechnen durch den entsprechenden Knoten des Kbm und Verifizieren der Gültigkeit des Nachrichtenauthentifizierungscodes, MAC, daraufhin Erhalten des ClearWord durch Entschlüsseln des verschlüsselten ClearWord nach dem Verifizieren des MAC.

**9.** MIPv6-Mobilknoten, der Folgendes umfasst:

ein Privatkennungs-Berechnungsmodul, das konfiguriert ist, dann, wenn der Mobilknoten auf ein Netz an einem Netzort zugreift und eine neue Care-of-Adresse, CoA, erhält, eine Privatkennung, PID, unter Verwendung der Care-of-Adresse zu berechnen, wobei PID = ClearWord XOR HoA, wobei das ClearWord eine synchron mit der Aktualisierung der Care-of-Adresse aktualisierte Zufallszahl ist, wobei ClearWord = Erste (128, HMAC_SHA1 (CN|Seed|HoA|CoA)), wobei Seed eine durch den Mobilknoten erzeugte Zufallszahl ist, wobei die HoA die Heimatadresse des Mobilknotens ist und wobei CN eine Adresse eines entsprechenden Knotens ist;

ein Einkapselungsmodul, das konfiguriert ist, eine Heimatadresse durch die PID zu ersetzen, die PID in eine Bindungsaktualisierungsnachricht zu füllen und ein ClearWord in eine Wort-Option der Bindungsaktualisierungsnachricht zu füllen; und ein Sendemodul, das konfiguriert ist, die Bindungsaktualisierungsnachricht, die die PID enthält, zu einem Heimatagenten bzw. zu dem entsprechenden Knoten zu senden.

**10.** MIPv6-Mobilknoten nach Anspruch 9, der ferner Folgendes umfasst:

ein Verschlüsselungsmodul, das konfiguriert ist, das ClearWord unter Verwendung eines Bindungsmanagementschlüssels, Kbm, zu verschlüsseln und das verschlüsselte ClearWord in die Wort-Option der Bindungsaktualisierungsnachricht zu füllen.

**11.** Entsprechender Knoten, der Folgendes umfasst:

ein Privatkennungs-Erhaltemodul, das konfiguriert ist, eine Privatkennung, PID, von einer empfangenen Bindungsaktualisierungsnachricht zu erhalten;

ein ClearWord-Erhaltemodul, das konfiguriert ist, ein ClearWord von der empfangenen Bindungsaktualisierungsnachricht zu erhalten, wobei eine Wort-Option zu der Bindungsaktualisierungsnachricht hinzugefügt wird und das ClearWord in die Wort-Option gefüllt wird, wobei das ClearWord eine synchron mit der Aktualisierung der Care-of-Adresse des Mobilknotens aktualisierte Zufallszahl ist; und

ein Heimatadressen-Erhaltemodul, das konfiguriert ist, eine Heimatadresse, HoA, in Übereinstimmung mit dem erhaltenen ClearWord und der erhaltenen PID zu erhalten, wobei die HoA = PID XOR Clear Word; und wobei die PID durch den Mobilknoten unter Verwendung von PID = ClearWord XOR HoA berechnet wird, wobei ClearWord = Erste (128, HMAC_SHA1 (CN|Seed|HoA|CoA)), wobei Seed eine durch den Mobilknoten erzeugte Zufallszahl ist und wobei CN eine Adresse des entsprechenden Knotens ist.

**12.** Entsprechender Knoten nach Anspruch 11, der ferner Folgendes umfasst:

ein Verifikationsmodul, das konfiguriert ist, die Bindungsaktualisierungsnachricht zu verifizieren, bevor das Privatkennungs-Erhaltemodul und das ClearWord-Erhaltemodul arbeiten.

**Revendications**

**1.** Procédé de communication d'un noeud mobile MIPv6, comprenant :

l'accès par le noeud mobile, à un réseau en un point d'accès et l'obtention d'une nouvelle adresse temporaire, CoA (Care of Address), et le calcul d'un identifiant privé, PID (Private Identifier), en utilisant l'adresse temporaire, avec PID = Mot en Clair OU-EX HoA, le Mot en Clair étant un nombre aléatoire mis à jour en synchronisme avec la mise à jour de l'adresse temporaire, avec Mot en Clair = Premier (128, HMAC_SHA1 (CN|Germe|HoA|CoA)), le Germe étant un nombre aléatoire généré par le noeud mobile, HoA (Home Address) étant l'adresse locale du noeud mobile, et CN étant une adresse d'un noeud correspondant ;

le remplacement, par le noeud mobile, de son adresse locale, HoA, par le PID, l'introduction du PID dans le message de mise à jour d'association, et l'envoi du message de mise à jour d'association à un agent local et au noeud correspondant, respectivement, une option Mot étant ajoutée au message de mise à jour d'association, et le Mot en Clair étant introduit dans l'option Mot ; et

la récupération, par l'agent local et le noeud correspondant, de l'adresse HoA du noeud mobile en utilisant le PID et le Mot en Clair après réception du message de mise à jour d'association, avec HoA = PID OU-EX Mot en Clair.

2. Procédé selon la revendication 1, dans lequel la mise à jour du PID est synchrone avec la mise à jour de l'adresse temporaire.

3. Procédé selon la revendication 1, dans lequel le PID est introduit dans une option d'adresse locale du message de mise à jour d'association.

4. Procédé selon la revendication 1, dans lequel l'option Mot est protégée par cryptage de type IPsec.

5. Procédé selon la revendication 1, dans lequel un nouveau numéro de séquence du message de mise à jour d'association est le résultat de l'exécution d'une opération OU-EX sur le Mot en Clair et le numéro de séquence initial du message de mise à jour d'association, et le nouveau numéro de séquence est introduit dans le message de mise à jour d'association en remplacement du numéro de séquence initial.

6. Procédé selon la revendication 5, dans lequel le noeud correspondant rétablit le nouveau numéro de séquence au numéro de séquence initial après récupération du Mot en Clair.

7. Procédé selon la revendication 1, dans lequel le procédé comprend en outre :

lorsque le noeud mobile se déplace vers un lieu étranger, l'obtention, par le noeud correspondant de l'adresse temporaire correspondante en utilisant un mécanisme de découverte de voisinage IPv6, et la réexpédition de paquets de données à un segment de réseau étranger auquel appartient l'adresse temporaire, le préfixe de l'adresse temporaire étant un préfixe d'une adresse de réseau étranger.

8. Procédé selon la revendication 1, dans lequel le procédé comprend en outre :

le cryptage, par le noeud mobile, du Mot en Clair en utilisant une clé de gestion d'association Kbm, et l'envoi du Mot en Clair crypté au noeud correspondant par l'intermédiaire du message de mise à jour d'association BU (Binding Update) ;

après réception du message de mise à jour d'association, le calcul, par le noeud correspondant, de la clé Kbm et la vérification de la validité du Code d'Authentification de Message MAC (Message Authentication Code), puis l'obtention du Mot en Clair en décryptant le Mot en Clair crypté après vérification du code MAC.

9. Noeud mobile MIPv6, comprenant :

un module de calcul d'identifiant privé configuré, lorsque le noeud mobile accède à un réseau en un certain lieu d'accès et obtient une nouvelle adresse temporaire, CoA, pour calculer un identifiant privé, PID, en utilisant l'adresse temporaire, avec PID = Mot en Clair OU-EX HoA ; le Mot en Clair étant un nombre aléatoire mis à jour en synchronisme avec la mise à jour de l'adresse temporaire ; avec Mot en Clair = Premier (128, HMAC_SHA1 (CN|Germe|HoA|CoA)), le Germe étant un nombre aléatoire généré par le noeud mobile, HoA étant l'adresse locale du noeud mobile, et CN étant une adresse d'un noeud correspondant ;

un module d'encapsulation configuré pour remplacer une adresse locale par le PID, introduire le PID dans le message de mise à jour d'association, et introduire un Mot en Clair dans une option Mot du message de mise à jour d'association ; et

un module d'envoi configuré pour envoyer respectivement le message de mise à jour d'association contenant le PID à un agent local et au noeud correspondant.

10. Noeud mobile MIPv6 selon la revendication 9, comprenant en outre :

un module de cryptage configuré pour crypter le Mot en Clair en utilisant une clé de gestion d'association Kbm, et introduire le Mot en Clair crypté dans l'option Mot du message de mise à jour d'association.

11. Noeud correspondant, comprenant :

un module d'obtention d'identifiant privé configuré pour obtenir un identifiant privé, PID, à partir d'un message de mise à jour d'association reçu ;

un module d'obtention de Mot en Clair configuré pour obtenir un Mot en Clair à partir du message de mise à jour d'association reçu ; une option Mot étant ajoutée au message de mise à jour d'association, et le Mot en Clair étant introduit dans l'option Mot, le Mot en Clair étant un nombre aléatoire mis à jour en synchronisme avec la mise à jour de l'adresse temporaire d'un noeud mobile ; et

un module d'obtention d'adresse locale configuré pour obtenir une adresse locale, HoA, conformément au Mot en Clair et au PID obtenus, avec HoA = PID OU-EX Mot en Clair ; et dans lequel le PID est calculé par le noeud mobile en utilisant PID = Mot en Clair OU-EX HoA, avec Mot en Clair = Premier (128, HMAC_SHA1 (CN|Germe|HoA|CoA)), le Germe étant un nombre aléatoire généré par le noeud mobile et CN étant une adresse du noeud correspondant.

**12.** Noeud correspondant selon la revendication 11, comprenant en outre :

un module de vérification configuré pour vérifier le message de mise à jour d'association avant que le module d'obtention d'identifiant privé et que le module d'obtention de Mot en Clair ne fonctionnent.

route optimazation mode

# Fig. 1

home agent

Home Test INIT (HoTI)

Care-of Test INIT (CoTI)

Home Test (HoT)

Care-of Test (CoT)

# Fig. 2

Binding Update (BU)

Message Authentication Code (MAC), Sequence Number, Care-
of Address

Binding Acknowledgment (BA)

Message Authentication Code, Sequence Number, State

# Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2004236937 A1

### Non-patent literature cited in the description

- Solutions for IP address Location Privacy in the presence of IP Mobility. *IETF STANDARD-WORKING-GRAFT, INTERNET ENGINEERING TASK FORCE, IETF, CH,* 14 February 2005, ISSN 0000-0004, draft-koodli-mip6-location-privacy-solutions-00.txt

- **YING QIU et al.** protocol for hiding movement of mobile nodes in mobile IPv6. *VEHICULAR TECHNOLOGY CONFERENCE,* 25 September 2005, vol. 2, ISBN 978-0-7803-9152-9, 812-815